Europäisches Patentamt

European Patent Office

Office européen des brevets

(19)

(11) EP 0 837 111 A1

(12) EUROPEAN PATENT APPLICATION

(43) Date of publication:
22.04.1998 Bulletin 1998/17

(51) Int Cl.6: C09D 5/02, C09D 17/00

(21) Application number: 97308143.3

(22) Date of filing: 14.10.1997

(84) Designated Contracting States:
AT BE CH DE DK ES FI FR GB GR IE IT LI LU MC NL PT SE

(30) Priority: 19.10.1996 GB 9621821

(71) Applicant: ECC INTERNATIONAL LIMITED
Theale, Reading, Berkshire RG7 4SA (GB)

(72) Inventors:
• Skuse, David Robert
St Austell, Cornwall PL25 4DJ (GB)
• Golley, Christopher Robin Langdon
St Austell, Cornwall PL25 4DJ (GB)

• Taylor, David Anthony
St Austell, Cornwall PL25 4DJ (GB)
• Preston, Janet Susan
St Austell, Cornwall PL25 4DJ (GB)
• Mortimer, Mark Daniel
St Austell, Cornwall PL25 4DJ (GB)

(74) Representative: McCormack, Derek James
ECC International Ltd,
Patents Department,
c/o John Keay House
St Austell, Cornwall PL25 4DJ (GB)

(54) **Processing and use of particulate materials, especially for preparing waterborne paint compositions**

(57)    A method of preparing a waterborne paint composition which includes the steps of:

(a) forming a dispersed suspension in an aqueous medium of inorganic particulate material comprising a composition of a titanium dioxide pigment and a mineral extender having in a paint composition a scattering coefficient less than titanium dioxide, the aqueous medium containing an anionic polyelectrolyte dispersing agent;

(b) concentrating the dilute dispersed suspension formed in step (a) without adding a flocculating agent and without the use of forced evaporation; and

(c) forming a paint composition by adding the concentrated suspension formed in step (b) to a hydrophilic binder, eg. one of the latex emulsions well known in the art, and optionally other paint ingredients.

EP 0 837 111 A1

**Description**

This invention is concerned with the processing and use of particulate materials, especially use as components for incorporation into waterborne paint compositions.

Paint compositions generally comprise an involatile, film-forming portion and a relatively volatile liquid vehicle. In waterborne paints the volatile vehicle consists predominantly of water. Examples of waterborne paints include aqueous coating, water-thinned, water-reducible, emulsion, latex, casein, cement and silicate paints. Waterborne paints consist predominantly of water, one or more film-forming polymeric binder materials, pigments and extenders. Other additives which are commonly used include dispersing agents for the pigments and extenders, biocides, antifoamers and rheology-modifying compounds. Pigments and extenders are generally incorporated into a waterborne paint composition in the form of finely divided particulate solid materials. A pigment is a material which confers opacity and the required hue in the applied paint film. Generally a pigment has a refractive index which is considerably different from that of water and of polymeric binder, so that it has the property of scattering light when incorporated in a waterborne paint. An extender is generally a fine particulate material which is considerably cheaper than a pigment, but has poorer (but not insignificant) light scattering properties (in particular a lower scattering coefficient) in a waterborne paint, because its refractive index is closer to that of water and of polymeric binder. It is a material which is capable of being added in various proportions to a pigment, thus reducing the overall cost of the paint formulation without seriously reducing the light scattering properties of the pigment.

Hitherto in existing industrial processes particulate materials such as pigments and extenders have generally been incorporated into waterborne paint formulations in the form of dry powders. However, mixing equipment capable of exerting a high shearing force is required to perform this operation, and a considerable expenditure of energy is necessary to ensure that the particulate solid materials are completely dispersed in the paint composition.

It has been proposed in the prior published literature art to provide the particulate materials for incorporation in waterborne paint compositions in the form of an aqueous slurry (suspension). It is clearly undesirable to add with the particulate material more water than is required in the final paint composition, thereby necessitating an operation to remove surplus water prior to use of the slurry. The maximum amount of water which can be added to the paint composition with the pigments and extenders depends upon the desired value of the pigment volume concentration, or percentage by volume of the pigment and extender in the total dry solids of the paint composition. However, if the pigment and extender are to be made available to the paint manufacturer in the form of aqueous suspensions, it is clearly desirable that these suspensions should contain the smallest practicable quantity of water, in order to minimise the costs of transporting and storing the suspensions. However, the particulate material, especially $TiO_2$, is known to present problems when formed into high solids slurries, eg. having a solids concentration of 75 per cent or more on a dry weight basis. Such slurries can have a tendency to gel and thicken which causes a high viscosity which increases with time and can therefore be difficult (or impossible) and expensive to pump, eg. to facilitate storage, transport, delivery and use.

There exists therefore a real and substantial need for a way of delivering to a paint manufacturer a $TiO_2$ pigment-containing slurry in a form which gives substantial benefits to the manufacturer.

According to the present invention in a first aspect there is provided a method of preparing a waterborne paint composition which includes the steps of:

(a) forming a dispersed suspension in an aqueous medium of inorganic particulate material comprising a composition of a titanium dioxide pigment and a mineral extender having in a paint composition a scattering coefficient less than titanium dioxide, the aqueous medium containing an anionic polyelectrolyte dispersing agent and having a solids concentration capable of being increased without loss of fluidity of the suspension;
(b) concentrating the dispersed suspension formed in step (a) without adding a flocculating agent and without the use of forced evaporation to form a concentrated and fluid (flowable) suspension;
(c) forming a paint composition by adding the concentrated suspension formed in step (b) to a hydrophilic binder and optionally other paint ingredients.

The method according to the first aspect of the present invention unexpectedly and beneficially provides a way in which a $TiO_2$-containing slurry can be provided and used in waterborne paint manufacture in a high solids concentration but does not suffer from the gellation problems obtained previously. Furthermore, the slurry can be in a form in which it can be incorporated into the paint composition without the need for separate transport and use of extender and dispersing agent. Furthermore, as demonstrated hereinafter, the formation of a paint composition in this way can surprisingly be made with a reduced amount of dispersing agent thereby reducing overall manufacturing cost of the paint composition. Still further, we have found that the paint composition produced in this way can unexpectedly have improved optical performance compared with a composition produced using conventional procedures.

The solids concentration of the suspension produced in step (a) may be less than 70 per cent, eg. less than 50%, by weight on a dry weight basis. It may be increased by at least 5% by use of step (b).

Step (a) in the method according to the first aspect of the present invention may include the following two steps:

(a1) forming an aqueous suspension containing at least 50% by dry weight of the inorganic particulate material and at least 0.05% by weight, based upon the dry weight of the particulate material, of an anionic polyelectrolyte dispersing agent; and

(a2) diluting the suspension formed in step (1) with water.

Preferably, the reduction in the dry weight percentage of the inorganic particulate material is at least 10% (of the suspension weight), preferably at least 20%, after the dilution step (a2) than before step (a2) is applied.

Steps (a2) and (b) may be repeated one or more times. Following the last application of step (b), the solids concentration of the concentrated suspension obtained may be at least 75%, eg. at least 80% by weight, on a dry weight basis.

The said inorganic particulate extender material may be one or more materials selected from the known group of kaolinitic clay, calcined kaolinitic clay, ground calcium carbonate, precipitated calcium carbonate, composite pigment materials which include precipitated calcium carbonate (eg. as described in EP 94304437.0), calcium sulfate, talc and mica.

The said inorganic particulate material employed in the method according to the first aspect may have a particle size distribution as conventionally employed for the material(s) involved in the type of paint composition to be produced. In general, 90% of the particles will have an esd (equivalent spherical diameter as measured by the well known technique of sedimentation) of less than 5 $\mu$m. Coarse extender materials may have a particle esd generally (ie., at least 90% by weight) in the range 2 $\mu$m to 5 $\mu$m. Fine extender materials and pigment materials may have a particle esd generally less than 2 $\mu$m, eg. 90% by weight less than 1 $\mu$m.

The inorganic particulate material in the said aqueous suspension may be dispersed therein using as an anionic polyelectrolyte one of the anionic polyelectrolytes known to those skilled in the mineral dispersion art for dispersion of the aforementioned inorganic particulate extender material(s) .

The anionic polyelectrolyte dispersing agent is advantageously a partially or totally neutralised water soluble salt of poly(acrylic acid) and/or of poly (methacrylic acid) having a number average molecular weight of not more than 20,000. The anionic polyelectrolyte dispersing agent may, for example, be a sodium or ammonium salt of a poly(acrylic acid) or a poly (methacrylic acid). Sodium polyacrylate having a number average molecular weight in the range from 1,000 to 10,000 is especially suitable. The amount of the anionic polyelectrolyte dispersing agent may be in the range of from 0.1% to 2.0% by weight, based on the weight of the particulate mineral components.

The active quantity of the dispersing agent may form in the aqueous suspension in step (a), preferably not more than 1%, eg. 0.5% to 1%, by weight based upon the dry weight of the inorganic material. We have found that the active quantity of dispersing agent specified for the dispersion of dry particulate materials when used to form a typical commercial waterborne gloss paint composition, namely 1.5% by weight, is excessive (and therefore costly), and a weight percentage of from 0.5% to 1%, eg. 0.75%, is unexpectedly suitable when the paint composition is prepared by the method according to the first aspect of the present invention, the dispersing agent being added in step (a) of the method.

Where step (a) includes steps (a1) and (a2) referred to hereinbefore the suspension is preferably diluted in step (a2) to a solids concentration in the range of from 30% to 70% on a dry weight basis and most preferably to a solids concentration in the range of from 40% to 60% on a dry weight basis.

In step (b) (referred to hereinbefore), the dilute suspension is preferably concentrated in a known way by means of a high speed centrifuge or by means of filtration or dialysis, eg. using a membrane filtration or dialysis device, eg. of the type described in United States Patent Specification No. 5223463. The membrane filtration device may be, for example, of the plate and frame, tubular or spiral type.

The suspension is preferably concentrated in step (b) (optionally after more than one cycle of step (a2) followed by step (b)) to give a suspension having a solids concentration of at least 80% on a dry weight basis.

The improvement of rheological properties of a dispersed suspension by use the steps of diluting and reconcentrating the suspension is described in Applicant's copending International Patent Application No. WO95/25146. The method according to the present invention employs that procedure to obtain unexpected benefits in the production of a fluid, high solids concentrate slurry of paint ingredient inorganic particulates and in the use of such a slurry to form the paint composition.

A waterborne paint composition generally consists predominantly of a hydrophilic binder, eg. a latex or emulsion of one or more polymeric materials, such as acrylic polymers or copolymers, together with at least one pigment, at least one extender for the pigment, a dispersing agent for the pigment and extender, optionally together with one or more other conventionally employed additives employed in low concentrations (eg. less than 10%, desirably less than 5%, by weight of composition in total), such as known thickeners, auxiliary or coalescing solvents, biocides, antifoaming agents, film forming agents, neutralisation agent or pH buffers, dryers, corrosion inhibitors and wet edge control agents.

The present invention makes it possible to supply to a paint manufacturer pigments and/or extenders in the form of fluid, pumpable aqueous suspensions having high solids concentrations, eg. of at least 75%, desirably in the region of 80% by weight or more. The suspensions produced by step (b) in the method according to the present invention are highly concentrated, and can therefore be transported and stored at relatively low cost, since the amount of water carried with the solid components is relatively reduced. Also, unlike $TiO_2$-containing suspensions of the prior art the suspension formed by step (a) can be introduced directly into waterborne paint formulations in step (c) in the method according to the present invention without any preliminary dispersing agent addition or dewatering at the paint manufacture site, and without separate delivery and mixing of the extender material, thereby beneficially and unexpectedly reducing the cost to the paint manufacturer.

In some cases, it may be necessary to use the particulate material(s) in a relatively dilute form, eg. forming from 50% to 70% by weight, when added to the other ingredient(s) of the paint composition. In such cases, it may be appropriate to transport the slurry product in concentrated form to the paint manufacture site and to dilute the slurry product with water for addition to form the paint composition. Of course, dilution, if required, can be carried out simply and inexpensively at the paint manufacture site.

The slurry product formed by step (b) in the method according to the first aspect can be sufficiently fluid to be easily pumped and handled even when the solids content of the product is 80% or more. Also, the tendency to gel or thicken on storage is reduced. These results are surprising, since the pigment and extender materials employed, especially $TiO_2$, would normally be expected to be unduly viscous, the viscosity increasing with time, when formed into a concentrated aqueous slurry, eg. containing at least 75%, especially 80% or more, by dry weight of the materials.

While we do not wish to be bound to any particular theory, we believe that the relatively high viscosity of a concentrated aqueous suspension of pigments and extenders, which have been dispersed with the aid of an anionic polyelectrolyte dispersing agent, is caused by the presence in the aqueous phase of excess cations, especially of sodium and calcium and non-adsorbed polyelectrolyte anions. Steps (a) and (b) of the method of the invention by which a dilute dispersed suspension is formed and is subsequently concentrated by removal of a substantial part of the aqueous phase reduces the concentration of ions in solution in the aqueous phase of the concentrated suspension, and thus reduces both the viscosity of the suspension for a given solids concentration, and its tendency to "gel", or increase in viscosity on storage. The use of an evaporative technique for concentrating the diluted suspension in step (b) is to be avoided, because this would not remove dissolved salts from the presence of the solid components of the paint composition.

According to the present invention in a second aspect there is provided an aqueous suspension of an inorganic particulate material which is a slurry product produced by steps (a) and (b) of the method according to the first aspect. The slurry product comprises a composition comprising a $TiO_2$ pigment material and an inorganic particulate extender material for use in forming a waterborne paint composition, the slurry product having a solids concentration of at least 75%, preferably at least 80%, eg. 80% to 90%, on a dry weight basis. The said slurry product may beneficially be flowable, eg. pumpable. The dry weight ratio of $TiO_2$ pigment material to extender material in the said composition may for example in the range of from 100% to 15% by weight. The extender material may be selected from the materials specified hereinbefore.

The slurry product according to the second aspect may be prepared in a mineral processing plant and subsequently transported for use to a paint manufacturing plant at a different site. The $TiO_2$ pigment material and the extender material may be materials which have been refined and processed by well known procedures (eg. by wet processing techniques) to a grade suitable for commercial sale and use to form paint compositions.

Considerable savings in the cost of capital equipment and in energy costs can be achieved if the pigments and extenders are made available to the paint manufacturer already mixed together and dispersed in the form of a concentrated aqueous suspension comprising the slurry product according to the second aspect.

The hydrophilic binder employed to form the waterborne paint composition in step (c) of the method according to the first aspect may comprise one of the binders known for use in waterborne paint compositions.

Examples include:

(a) alkyd resins; these are relatively low molecular weight polycondensates of multivalent alcohols or organic acids; they may be formed into emulsions or comprise hydrogels or water soluble compounds;
(b) amino resins; these comprise for example melamine, urea or guanamine resins; hexamethoxymethyl melamine is a fully water soluble example;
(c) cellulose derivatives; these may be water soluble derivatives obtained by esterification and etherization of cellulose; examples are methyl-, carboxymethyl, hydroxyethyl- and hydroxypropylcellulose;
(d) epoxy resins, eg. obtained by condensation of epichlorohydrin, bisphenol A and similar monomers;
(e) epoxy resin esters and other derivatives; these are produced by esterification of an epoxy resin with fatty acids or by treatment of the epoxy resin with amines or polyamides;

(f) saturated polyesters; these generally comprise saturated polyesters which are formed from polycarboxylic acids and polyalcohols;

(g) resins derived from natural vegetable and animal oils eg. linseed, soya, hydrated castor, wood and fish oils; these may be emulsified in water;

(h) modified polybutadienes; these may comprise butadienes polymerised optionally with other monomers; they may be transferred to the aqueous phase in neutralised form by use of acids or bases as appropriate;

(i) phenolic resins; these are produced by condensation of phenols with formaldehyde and other substances;

(j) poly(meth)acrylates; these exist in a large variety of homopolymers as well as copolymers;

(k) polyurethanes and polyisocyanates; these are generally prepared in a manner similar to polyurethanes for solvent based paints and then dispersed or emulsified in water;

(l) polyvinylesters and their copolymers; examples include polymers of vinyl acetate, vinyl propionate, vinyl laurate and vinyl versatate;

(m) polysiloxanes; these are produced by the condensation of silanes;

(n) silicates;

(o) styrene-butadiene copolymer dispersions;

(p) halogen containing polymers, eg. obtained from vinyl chloride and vinylidene chloride and fluorine containing monomers;

(q) poly(ethylene-vinyl ester) resins;

(r) hydrocarbon resins.

The various ways in which the above resins or binders may be used in water to form paint compositions, eg. as emulsions, gels, dispersions, soluble compounds etc. as appropriate, will be well known to those skilled in the art of waterborne paint manufacture. Paint compositions may comprise blends of 2 or more of the above resins or binders.

The paint composition may also include one or more other known additives, eg. as specified above, eg. forming up to 10% by weight of the paint composition. The weight ratio of inorganic particulate material to binder on a dry weight basis may be in the range of from 20:1 to 1:1 depending on the extent of gloss or matt paint finish required. The PVC (defined hereinafter), of the composition may be in the range 15% to 85%.

Embodiments of the present invention will now be described by way of example with reference to the following Examples.

## EXAMPLE 1

Two aqueous suspensions, Suspensions A and B, were prepared each containing a titanium dioxide pigment and a calcium carbonate extender in the weight ratio of 19 parts by weight of the pigment to 5 parts by weight of the extender. In each case a sodium polyacrylate dispersing agent for the pigment and extender was used.

Suspension A was prepared by mixing the pigment and the extender into sufficient water to form a suspension containing about 70% by weight of dry solids. The active amount of the sodium polyacrylate dispersing agent used was 1.5% by weight, based on the total dry weight of the pigment and extender.

Suspension B was prepared by mixing the pigment and the extender into sufficient water to form a suspension containing about 80% by weight of dry solids. The amount of the sodium polyacrylate dispersing agent used was 0.75% by weight, based on the total dry weight of the pigment and extender.

Portions of each suspension, Suspensions A1 and B1 respectively, were treated in accordance with an embodiment of the second aspect of the invention by dilution with water to a solids concentration of 40% by weight, followed by reconcentration to a solids concentration of 80% by weight, or a little above, in an MSE CENTAUR™ 2 centrifuge for 80 minutes at 2900 rpm. In each case the solids concentration was adjusted to 80% by weight, if necessary, by adding back a small quantity of the supernatant liquid which had been removed in the centrifuge.

Further portions of the suspensions, Suspensions A2 and B2 respectively, were not treated by dilution and reconcentration.

A further portion of Suspension A, Suspension A3, was concentrated by thermal evaporation to a solids concentration of 80% by weight.

The viscosity of each suspension was measured by means of a Brookfield Viscometer at a spindle speed of 100 rpm immediately after preparation ($T_0$), and 1 hour and 24 hours after preparation ($T_1$ and $T_{24}$ respectively). Suspensions A1 and B1 were then each diluted with a further small quantity of water and the viscosities were measured again. The steps of dilution and measuring the viscosities were then repeated one further time. The results are set forth in Table 1 below:-

Table 1

| Suspension | % by wt. solids | $T_0$ | $T_1$ | $T_{24}$ |
|---|---|---|---|---|
| A1 | 80.0 | 605 | 850 | 1360 |
|  | 79.4 | 370 | 440 | 540 |
|  | 77.3 | 220 | 210 | 220 |
| A2 | 69.2 | 190 | 360 | 670 |
| A3 | 80.0 | >10000 |  |  |
| B1 | 80.3 | 430 | 590 | 945 |
|  | 79.3 | 265 | 305 | 380 |
|  | 77.0 | 130 | 125 | 160 |
| B2 | 80.1 | 600 | 1190 | 1750 |

These results show that Suspension A, the suspension which was prepared using the quantity of dispersing agent recommended in the typical waterborne gloss paint formulation, after treatment in accordance with an embodiment of the second aspect of the invention, showed an improvement in viscosity such that the viscosity of a treated suspension with a solids content of 79.4% by weight is approximately the same as an untreated suspension having a solids content of 69.2 by weight.

Thermal concentration of an untreated suspension to a solids level of 80.0%, Suspension A3, also gave a suspension with an unacceptably high viscosity.

Similarly the viscosity of Suspension B, which had been prepared using the smaller, optimal quantity of dispersing agent, was greatly reduced, for a given solids concentration, when the suspension was treated in accordance with the method of dilution and reconcentration embodying the invention.

An equivalent untreated suspension having a solids content of 80.0% by weight had such a high viscosity that it could not be prepared/or handled easily.

## EXAMPLE 2

Waterborne gloss paint compositions were prepared generally in accordance with the formulation given in Table 2 as follows.

TABLE 2

| Ingredient | % by Weight |
|---|---|
| Titanium dioxide | 19.0 |
| Extender | 5.0 |
| Sodium polyacrylate solution dispersing agent | 0.9 |
| Biocide | 0.1 |
| Antifoamer | 0.1 |
| Polypropylene glycol | 5.0 |
| Ester alcohol coalescing solvent | 1.3 |
| Coalescing solvent - mixture of combustible aromatic hydrocarbons | 0.6 |
| Acrylic copolymer emulsion latex | 60.0 |
| Alkali soluble copolymer latex with thickening properties | 1.3 |
| Multi-functional amino alcohol for pH control | 0.6 |
| Water | 6.1 |

The composition specified in Table 2 also had the following properties:

| | |
|---|---|
| % by weight of solids | 51.77 |
| % by volume of solids | 39.83 |
| Specific gravity | 1.2597 |
| %PVC | 21.16 |

In Table 2 "%PVC" or percentage pigment volume concentration is defined as:

$$\%PVC = \frac{V_P \div V_E}{V_P + V_E + V_V} \times 100$$

where

$V_P$ = pigment volume
$V_E$ = extender volume
$V_V$ = vehicle volume

wherein "Vehicle" is the base solids composition excluding pigment and extender.

The sodium polyacrylate dispersing agent was received as an aqueous solution containing 40% by weight of active sodium polyacrylate. The amount of active sodium polyacrylate used corresponded to 1.5% by weight, based on the total dry weight of pigment and extender.

Further gloss paint compositions were prepared having the composition as given in Table 1 except that the amount of dispersing agent was reduced to 0.45% by weight (0.75% active sodium polyacrylate).

In four of the paint compositions, the pigment and extender were added in the form of aqueous suspensions of solids concentration 80% by weight. The four suspensions used were A1, A3, B1 and B2 (A1 and A3 to give a 1.5% active dispersing agent concentration and B1 and B2 to give a 0.75% active dispersing agent concentration.) The fifth paint composition was prepared by mixing in the pigment and extender as dry powders using an active dispersing agent concentration of 1.5%.

The viscosity of each paint composition was measured by means of the Brookfield Viscometer at a spindle speed of 10 rpm. The opacity and the Kubelka-Munk light scattering coefficient, S, of the paint film produced by applying each composition to a suitable substrate and allowing it to dry were also determined.

The opacity and scattering coefficient were determined by applying films of each of the paints to a clear polyester sheets using a block applicator with a 100 µm gap. After drying overnight at 22°C, five numbered discs of approximately 6 cm diameter were marked on each of the coated sheets. Each marked area was then placed over a black glass tile of less than 1% reflectance, with a few drops of white spirit introduced between the underside of the polyester film and the tile to ensure good optical contact. The reflectance value $R_0$, for each marked area was measured by means of a Carl Elrepho[TM] Spectrophotometer fitted with a FMC/Y filter (Filter No. 10-400-700 nm wavelength range). The marked areas of the film were then punched out using a cutter to give discs of diameter 5.1 cm. These five discs were numbered and weighed before being placed in an acetone bath. This treatment removes paint from the disc, without affecting the weight of the polyester film. The discs were then cleaned, dried and reweighed in order to obtain the weight of the dry paint film which had originally been applied to each of the numbered discs. From the weight, the thickness, X, of the paint film which had been applied to each disc was calculated.

The remainder of the coated film was then cut into twelve portions, and the reflectance from the top surface of a stack of these twelve portions was measured by means of the spectrophotometer fitted with the FMC/Y filter. The reflectance value obtained in this way was denoted by $R_\infty$.

According to the Kubelka-Munk theory of light scattering and adsorption, the reflectance to visible light, R, of a paint film applied over a substrate of reflectance $R_g$ is given by expression (1) below:

$$R = \frac{(R_g - R_\infty)/R_\infty - R_\infty(R_g - 1/R_\infty)\exp[SX(1/R_\infty - 1/R_0)]}{(R_g - R_\infty) - (R_g - 1/R_\infty)\exp[SX(1/R_\infty - 1/R_0)]} \quad (1)$$

The reflectance, $R_w$, of the paint film over an ideal white substance of reflectance 0.8 is obtained by substituting in expression (1) the value of 0.8 for $R_g$, and the value of $X_{20}$ for X, where $X_{20}$ is the weight per unit area of a paint film with a spreading rate of 20 m²l⁻¹, and is given by expression (2) below:

$$X_{20} = \frac{\pi r^2 ps}{1000 \times 20} \quad (2)$$

where r is the radius of the disc cut from the polyester film,

p is the density of the liquid paint in g.cm⁻³, and

s is percentage by weight of solids in the liquid paint.

The reflectance, $R_b$, of the paint film over an ideal black substrate of zero reflectance is obtained by substituting in expression (1) the value of O for $R_g$, and the value of $X_{20}$ for X. The opacity of the paint film is given by expression (3) below:

$$\text{Opacity} = \frac{R_b}{R_w} \times 100 \tag{3}$$

The Kubelka-Munk scattering coefficient, S, was calculated from the formula (4) below:

$$SX_m = \frac{R_\infty}{(1-R_\infty^2)} \log_e \frac{1-R_\infty.R_0}{R_\infty-R_0}.R_\infty \tag{4}$$

where $X_m$ = paint film thickness
The results are set forth in Table 3 below:

Table 3

|  | Suspension A1 (invention) | Suspension A3 (comparative) | Suspension B1 (invention) | Suspension B2 (comparative) | Dry Powders (comparative) |
|---|---|---|---|---|---|
| Wt.% solids | 53.6 | 54.0 | 54.1 | 54.0 | 52.9 |
| Vol. % solids | 39.83 | 39.83 | 39.83 | 39.83 | 39.83 |
| Specific gravity | 1.2597 | 1.2597 | 1.2597 | 1.2597 | 1.2597 |
| %PVC | 21.16 | 21.16 | 21.16 | 21.16 | 21.16 |
| Viscosity (mPa. s) | 1540 | 1740 | 1640 | 1720 | 2800 |
| Opacity (%) | 90.6 | 90.0 | 91.1 | 90.2 | 89.5 |
| Scattering coefficient | 1180 | 1122 | 1224 | 1146 | 1100 |

These results show that the paint compositions which have been prepared using the suspensions of pigment and extender which have been treated in accordance with the method embodying the invention, have lower viscosities and higher opacity and light scattering coefficients than the paints which were prepared using untreated suspensions, or by adding the pigment and extender in the form of dry powders.

**Claims**

1. A method of preparing a waterborne paint composition which includes the steps of:

   (a) forming a dispersed suspension in an aqueous medium of inorganic particulate material comprising a composition of a titanium dioxide pigment and a mineral extender having in a paint composition a scattering coefficient less than titanium dioxide, the aqueous medium containing an anionic polyelectrolyte dispersing agent;
   (b) concentrating the dispersed suspension formed in step (a) without adding a flocculating agent and without the use of forced evaporation; and
   (c) forming a paint composition by adding the concentrated suspension formed in step (b) to a hydrophilic binder and optionally other paint ingredients.

2. A method as claimed in claim 1 and wherein the dry weight percentage of the inorganic particulate material contained in the concentrated suspension formed in step (b) is at least 75%.

3. A method as in claim 1 and wherein the dry weight percentage of the inorganic particulate material contained in the concentrated suspension formed in step (b) is greater than 80%.

4. A method as in claim 1, claim 2 or claim 3 and wherein step (a) includes the following steps:

    (a1) forming an aqueous suspension containing at least 50% by dry weight of the particulate material, and at least 0.05%, based on the dry weight of the particulate material, of an anionic polyelectrolyte dispersing agent; and
    (a2) diluting the suspension formed in step (al) with water.

5. A method as claimed in any one of the preceding claims and wherein the active amount of dispersing agent in the suspension formed in step (a) is not greater than 1% by weight based on the dry weight of the particulate material present.

6. A method as in any one of the preceding claims and wherein the concentration in step (b) is carried out by centrifugation or by use of filtration or dialysis.

7. An aqueous slurry product which is produced by steps (a) and (b) of the method claimed in any one of the preceding claims.

8. A product as in claim 7 and which is flowable.

9. A method of use of the slurry product claimed in claim 7 or 8 which includes delivering the slurry product to a paint manufacture site and preparing at the site a waterborne paint composition by adding the slurry product to a hydrophilic binder optionally together with other additives.

10. A method of use as claimed in claim 9 and wherein the slurry product after production is transported to a paint manufacture site and used in the preparation of the waterborne paint composition without further addition of dispersing agent and extender and without further concentration.

**European Patent Office**

**EUROPEAN SEARCH REPORT**

Application Number

EP 97 30 8143

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| Y,D | WO 95 25146 A (ECC INTERNATIONAL LTD.)<br>* page 1, paragraph 2 *<br>* page 2, line 4-31 *<br>* page 3, paragraph 1 *<br>* page 4, paragraph 1 *<br>--- | 1-10 | C09D5/02<br>C09D17/00 |
| Y | EP 0 657 385 A (TIOXIDE GROUP SERVICES)<br>* page 2, line 11-29 *<br>* page 3, line 8-11 *<br>* page 4, line 39-41 *<br>--- | 1-10 | |
| A | GB 1 400 067 A (AMERICAN CYANAMID COMPANY)<br>* whole document *<br>--- | 1,7,9 | |
| A | US 4 536 268 A (EARL R. LAWHORNE)<br>* whole document *<br>----- | 1,7 | |
| | | | TECHNICAL FIELDS SEARCHED (Int.Cl.6)<br><br>C09D |

The present search report has been drawn up for all claims

| Place of search | Date of completion of the search | Examiner |
|---|---|---|
| THE HAGUE | 30 January 1998 | Girard, Y |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)